# EUROPEAN PATENT APPLICATION

(11) **EP 4 563 334 A1**
(43) Date of publication of application: **04.06.2025**
(21) Application number: 23859864.3
(22) Date of filing: 14.07.2023
(51) Int. Cl.: B29C 70/44, B29C 43/12, B29C 43/36, B29C 53/06, B29C 53/82, B29C 70/16, B29C 70/56

(54) **MOLDING METHOD AND MOLDING DEVICE FOR COMPOSITE MATERIAL**

(30) Priority: 29.08.2022 JP 2022136039
(71) Applicant: Mitsubishi Heavy Industries, Ltd., Tokyo 100-8332 (JP); Akita University, Akita-shi Akita 010-8502 (JP)
(72) Inventor: MURAOKA, Mikio, Akita-shi, Akita 010-8502 (JP); TAKAGI, Kiyoka, Tokyo 100-8332 (JP); MATSUYAMA, Daiki, Tokyo 100-8332 (JP)
(74) Representative: Hoffmann Eitle
(86) International application number: PCT/JP2023/026025
(87) International publication number: WO 2024/048094

(57) **Abstract**

There is provided a composite material molding method for molding a composite material by shaping and curing a laminate in which a plurality of fiber sheets are laminated using a molding die, the composite material including a bent portion having a bent shape, the molding die having a molding surface for molding the composite material and a recess formed in a portion other than the molding surface, the composite material molding method including: a step of disposing the laminate on the molding surface of the molding die; a step of covering the laminate with a tension generating member that generates tension in the laminate at a time of shaping, and disposing a part of the tension generating member to face the recess; a step of covering the laminate covered with the tension generating member with a covering member to hermetically seal between the covering member and the molding die; a step of sucking an atmosphere between the covering member and the molding die and drawing in a part of the tension generating member into the recess to shape the laminate; and a step of curing the laminate after shaping to mold the composite material.

## Description

### Field

The present disclosure relates to a composite material molding method and a molding apparatus.

### Background

Conventionally, there have been known composite material molding methods and molding apparatuses for molding a composite material by forming a prepreg material on a non-planar portion of a lay-up mandrel, covering a bag film on the prepreg material, vacuum-sucking the bag film, and heating and curing the prepreg material (see, for example, Patent Literature 1).

### Citation List

### Patent Literature

Patent Literature 1: JP 2012-187925 A

### Summary

### Technical Problem

As a composite material, for example, there is a beam member having a concave cross section which extends in a longitudinal direction and has a bent portion bent in a cross section orthogonal to the longitudinal direction. The thickness of the composite material having the bent portion changes during molding. When the thickness is changed due to curing shrinkage of resin or the like, the length of the radius in the bent portion is changed, so that a circumferential length difference occurs in the bent portion before and after molding. Therefore, the generation of the circumferential length difference may cause wrinkles around the bent portion, causing molding defects.

Therefore, an object of the present disclosure is to provide a composite material molding method and a molding apparatus capable of suppressing occurrence of molding defects due to shaping of a laminate.

### Solution to Problem

A composite material molding method according to the present disclosure is for molding a composite material by shaping, by using a molding die, a laminate in which a plurality of fiber sheets are laminated into a shape including a bent portion having a bent shape, and curing a resin impregnated into the fiber sheets. The composite material includes the bent portion having the bent shape, the molding die has a molding surface for molding the composite material and a recess formed in a portion other than the molding surface, and the composite material molding method includes the steps of: disposing the laminate on the molding surface of the molding die; covering the laminate with a tension generating member that generates tension in the laminate at a time of shaping, and disposing a part of the tension generating member to face the recess; covering the laminate covered with the tension generating member with a covering member to hermetically seal between the covering member and the molding die; sucking atmosphere between the covering member and the molding die to draw in a part of the tension generating member into the recess to shape the laminate; and curing the laminate after shaping to mold the composite material.

A molding apparatus according to the present disclosure is for molding a composite material by shaping a laminate in which a plurality of fiber sheets are laminated into a shape including a bent portion having a bent shape and curing a resin impregnated into the fiber sheets, the composite material including the bent portion having the bent shape. The molding apparatus includes: a molding die including a molding surface partially including a bent molding surface for molding the composite material into a bent shape, and a recess for drawing in a part of a tension generating member that generates tension in the laminate at a time of shaping; the tension generating member that covers the laminate; a covering member that covers the laminate covered with the tension generating member; and a suction apparatus that sucks atmosphere between the covering member and the molding die in a state where the covering member and the molding die are hermetically sealed.

### Advantageous Effects of Invention

According to the present disclosure, it is possible to suppress the occurrence of molding defects due to the shaping of the laminate.

### Brief Description of Drawings

FIG. 1 is an external perspective view of an example of a composite material molded by a composite material molding method and a molding apparatus according to a first embodiment.
FIG. 2 is a diagram schematically illustrating the molding apparatus according to the first embodiment.
FIG. 3 is a diagram illustrating an example of fixing of a laminate.
FIG. 4 is a diagram illustrating an example of fixing of a laminate.
FIG. 5 is an explanatory diagram related to the composite material molding method according to the first embodiment.
FIG. 6 is a diagram schematically illustrating a molding apparatus according to a second embodiment.
FIG. 7 is a diagram schematically illustrating a molding die of a molding apparatus according to a third embodiment.

### Description of Embodiments

Hereinafter, embodiments according to the present disclosure will be described in detail with reference to the drawings. Note that this disclosure is not limited by the embodiments. In addition, components in the following embodiments include those that can be easily replaced by those skilled in the art or those that are substantially the same. Furthermore, the components described below can be appropriately combined, and in a case where there are a plurality of embodiments, each embodiment can be combined.

### [First Embodiment]

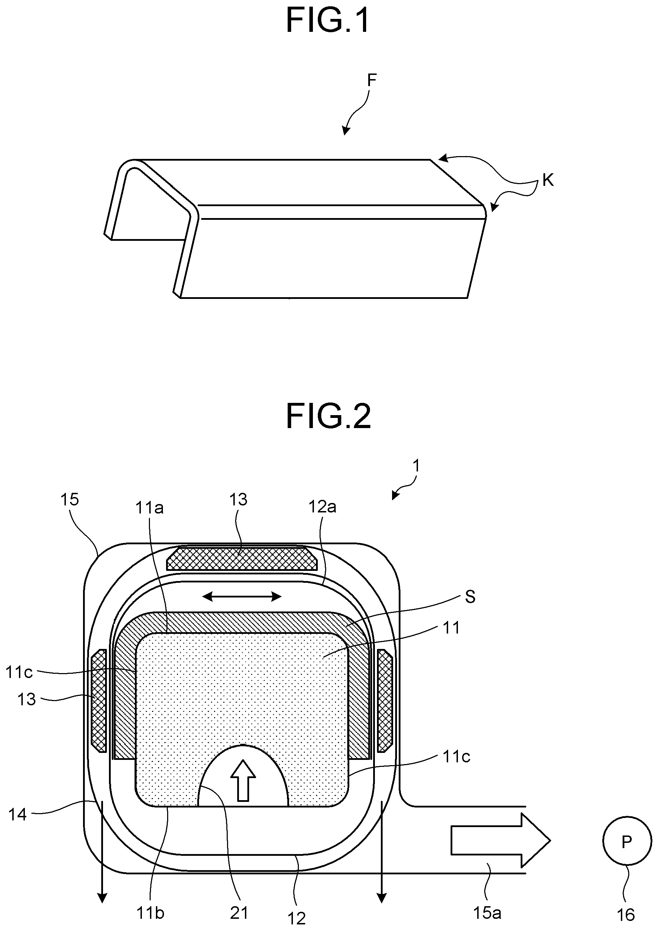

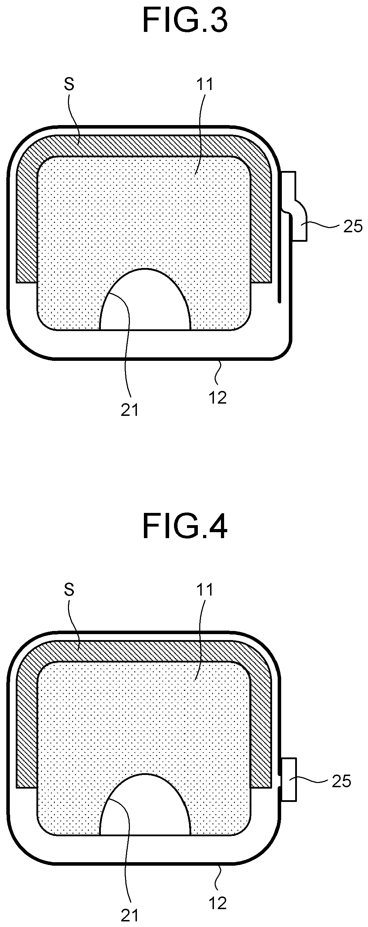

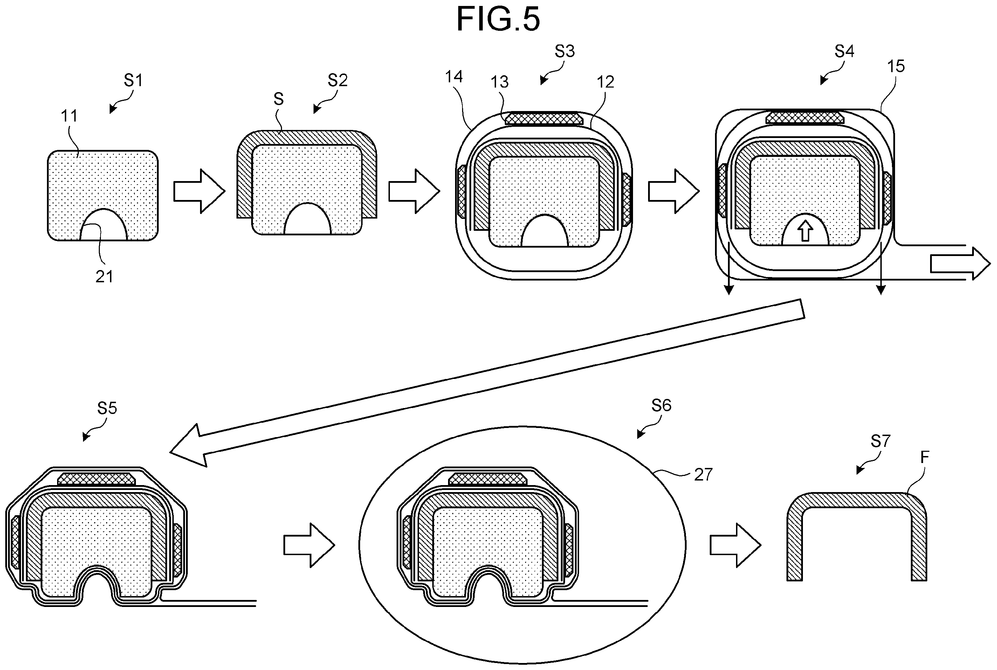

FIG. 1 is an external perspective view of an example of a composite material molded by a composite material molding method and a molding apparatus according to a first embodiment. FIG. 2 is a diagram schematically illustrating the molding apparatus according to the first embodiment. FIGS. 3 and 4 are diagrams illustrating an example of fixing the laminate. FIG. 5 is an explanatory diagram related to the composite material molding method according to the first embodiment.

The composite material molding method and the molding apparatus 1 according to the first embodiment is an apparatus for molding a composite material F having a bent portion K having a bent shape. As illustrated in FIG. 1, in the first embodiment, the composite material F to be molded is a beam member (spar) whose longitudinal direction is a predetermined direction, and is molded to have a concave cross section by forming two bent portions K bent inward in an orthogonal plane orthogonal to the longitudinal direction.

In the first embodiment, a plurality of fiber sheets are laminated on a molding die 11 to form a laminate S in a shape having the bent portion K. Then, the laminate S is cured to mold the composite material F illustrated in FIG. 1. Note that the laminate S formed in a planar shape by laminating a plurality of fiber sheets may be shaped into a shape having the bent portion K using the molding die 11. In the bent portion K, the thickness in the laminating direction changes at least one of at the time of shaping and at the time of curing, and the occurrence position of the wrinkle is predicted in advance on the basis of this change. Note that, in the first embodiment, a sheet in which reinforcing fibers are impregnated with a resin is applied as the fiber sheet, and for example, a prepreg is applied. In the first embodiment, the prepreg is applied as the fiber sheet, but the present invention is not particularly limited to this configuration, and a reinforcing fiber sheet in a dry state containing no resin may be applied.

### Molding Apparatus

The molding apparatus 1 will be described with reference to FIG. 2. As illustrated in FIG. 2, the molding apparatus 1 includes the molding die 11, a tension generating film (tension generating member) 12, a breather 14, a bag film (covering member) 15, and a suction apparatus 16. The molding apparatus 1 may further include a pressure plate (pressing member) 13 in order to obtain an effect to be described later.

The molding die 11 is a mold material for shaping the laminate S before molding. The molding die 11 is a molding die elongated in the longitudinal direction. The molding die 11 has a molding surface and a recess 21 formed in a portion other than the molding surface. Specifically, the molding die 11 includes an upper surface 11a, a lower surface 11b facing the upper surface 11a, and a pair of side surfaces 11c provided on both sides of the upper surface 11a and the lower surface 11b in the width direction. The molding surface includes the upper surface 11a and a part of a pair of side surfaces 11c connected to the upper surface 11a on the upper surface 11a side. The connection portion connecting the upper surface 11a and the side surface 11c serves as a bent molding surface for molding the composite material F into a bent shape.

The recess 21 is provided in a portion other than the molding surface, and is provided on the lower surface 11b in the first embodiment. The recess 21 is formed by, for example, a curved surface with no steep turns. The recess 21 is a hole or a depression formed by being recessed into the lower surface 11b in order to draw in a part of the tension generating film 12 disposed opposite to the lower surface 11b in a step of sucking the internal atmosphere described later. The recess 21 is formed to extend along the longitudinal direction of the molding die 11.

With respect to such a molding die 11, as illustrated in FIG. 2, the laminate S is disposed on the molding surface of the molding die 11 and is disposed so as not to face the recess 21 (in a state where the recess 21 is opened).

Here, the laminate S disposed in the molding die 11 will be described. The fiber sheet used for the laminate S is a unidirectional material in which fiber directions are aligned in a predetermined direction. The laminate S is obtained by laminating fiber sheets in different fiber directions. Note that, in the first embodiment, the unidirectional material is applied as the fiber sheet, but the fiber sheet may be a woven fabric or a nonwoven fabric, and is not particularly limited.

The tension generating film 12 is disposed to cover the outside of the laminate S disposed in the molding die 11. The tension generating film 12 is a film that generates tension in the laminate S at the time of shaping. The tension generating film 12 only needs to have flexibility, tensile strength to withstand a tensile load in a step of sucking an internal atmosphere described later, and heat resistance to withstand heating in a composite material molding step, and does not need elasticity. In order to effectively apply the tension, it is preferable that the elasticity is small. Suitable materials include, for example, polytetrafluoroethylene (PTFE, for example, Teflon (registered trademark)) and polyimide (for example, Kapton (registered trademark)). As illustrated in FIG. 2, the tension generating film 12 is wound around the molding die 11 in the circumferential direction with the longitudinal direction of the molding die 11 as the axial direction of the central axis. As a result, the tension generating film 12 is disposed so as to integrally cover the molding die 11 and the outside of the laminate S disposed on the molding die 11 in the circumferential direction in a state where a part thereof faces the recess 21.

In addition, the tension generating film 12 may have releasability from the laminate S. For example, in the tension generating film 12, a release agent may be applied to the surface on the laminate S side, or the surface on the laminate S side may be subjected to release treatment. Note that the tension generating film 12 may be a peel ply that can be peeled away from the laminate S. In addition, a release film 12a having releasability may be inserted between the tension generating film 12 and the laminate S.

Here, the fixing method of the tension generating film 12 wound around the molding die 11 will be described with reference to FIGS. 2 to 4. Both end portions in the circumferential direction of the tension generating film 12 wound around the molding die 11 in the circumferential direction are fixed in order to secure a reaction force against a tensile load in a step of sucking the internal atmosphere described later. In an example illustrated in FIG. 2, the tension generating film 12 is fixed by being arranged in a loop shape in the molding die 11.

In an example illustrated in FIG. 3, the tension generating film 12 is wound around the molding die 11 in a loop shape, both end portions in the circumferential direction of the tension generating film 12 are overlapped, and an overlapping portion where both end portions overlap is fixed by a fixing member 25 such as a tape. At this time, the overlapping portion where both end portions of the tension generating film 12 overlap is formed so as not to face the recess 21. Note that he overlapping portion may be formed so as to face the recess 21.

In an example illustrated in FIG. 4, the tension generating film 12 is wound around the molding die 11 in a loop shape, both end portions in the circumferential direction of the tension generating film 12 are butted so as to face each other, and a butted portion where both end portions are butted is fixed by the fixing member 25 such as a tape. At this time, the butted portion where both end portions of the tension generating film 12 are butted is formed so as not to face the recess 21. Note that the butted portion may be formed so as to face the recess 21.

The molding apparatus 1 of the first embodiment may further include a pressure plate 13. The laminate S may be pressed by additionally using the pressure plate 13. The pressure plate 13 is disposed outside the tension generating film 12 and is disposed at a predetermined position where pressing of the laminate S is required. In the first embodiment, the pressure plate 13 is disposed to face the upper surface 11a and the pair of side surfaces 11c of the molding die 11. The pressure plate 13 is formed in a plate shape, and suppresses a change in shape on the outside of the laminate S.

The breather 14 is disposed to cover the outside of the tension generating film 12 and the pressure plate 13. The breather 14 forms a degassing circuit serving as a flow path through which the internal atmosphere of the bag film 15 flows at the time of vacuum suction described later.

The bag film 15 is a bag-shaped film that accommodates the laminate S together with the molding die 11. The interior of the bag film 15 is hermetically sealed. Therefore, the interior of the bag film 15 and the molding die 11 are hermetically sealed to the outside. The bag film 15 is provided with a suction hole 15a connected to the suction apparatus 16. When the internal atmosphere of the bag film 15 is vacuum-sucked, a pressing force due to the difference between the inside and outside air pressures (for example, atmospheric pressure) is applied to the laminate S. Note that the pressure of the bag film 15 is not particularly limited to the atmospheric pressure, and a pressing force equal to or higher than the atmospheric pressure may be applied to the laminate S by pressurizing the bag film with an autoclave or the like.

The suction apparatus 16 is connected to the suction hole 15a of the bag film 15 to vacuum the interior of the bag film 15.

### Composite Material Molding Method

Next, a molding method for the composite material F using the molding apparatus 1 will be described with reference to FIG. 5. As illustrated in FIG. 5, in the molding method for the composite material F, first, the molding die 11 in which the recess 21 is formed is prepared (step S1). Subsequently, in the molding method for the composite material F, the laminate S is disposed in the molding die 11 (step S2). In step S2, a plurality of fiber sheets are laminated along the molding surface of the molding die 11 to form the laminate S. Note that, in step S2, in order to remove air remaining between layers of the fiber sheet (to debulk the fiber sheet), vacuuming may be performed using the bag film 15 every time several layers are laminated.

Next, in the molding method for the composite material F, the tension generating film 12, the pressure plate 13, and the breather 14 are sequentially disposed outside the laminate S disposed in the molding die 11 (step S3). In step S3, the tension generating film 12 is wound in the circumferential direction of the molding die 11, and a part thereof is disposed so as to face the recess 21. Note that, in step S3, the tension generating film 12 may be fixed in any manner illustrated in FIGS. 2 to 4.

Then, in the molding method for the composite material F, the laminate S arranged in the molding die 11 is accommodated inside the bag film 15 together with the tension generating film 12, the pressure plate 13, and the breather 14 (step S4). As a result, in step S4, the laminate S is covered with the bag film 15, and the interior of the bag film 15 in which the molding die 11 is accommodated is hermetically sealed. Subsequently, in the molding method for the composite material F, the interior of the bag film 15 is vacuumed by the suction apparatus 16 to suck the internal atmosphere of the bag film 15 through the degassing circuit formed by the breather 14 (step S5). When the interior of the bag film 15 is vacuumed in step S5, a pressing force is applied to the tension generating film 12 via the bag film 15 due to the difference between the inner pressure and the outer pressure, whereby a part of the tension generating film 12 is drawn into the recess 21 of the molding die 11, whereby a tensile load in the circumferential direction is applied to the laminate S via the tension generating film 12. As a result, even in a case where a circumferential length difference is generated in the bent portion K by applying a tensile load to the laminate S, the laminate S is extended so as to eliminate the slack of the fiber caused by the circumferential length difference, whereby the generation of the wrinkle around the bent portion K is suppressed. Then, in step S5, the laminate S is shaped along the molding surface of the molding die 11. Note that, in a case where the fiber sheet of the laminate S is a reinforcing fiber sheet in a dry state, a step of impregnating the fiber sheet with a resin is executed after step S5 or simultaneously with step S5.

Thereafter, in the molding method for the composite material F, the laminate S after the shaping is placed in a heating furnace 27 together with the bag film 15 and heated to cure the resin impregnated in the laminate S (step S6). In step S6, the shaped laminate S is thermally cured to mold the composite material F including the bent portion K. Note that, also in step S6, by applying a tensile load in the circumferential direction to the laminate S via the tension generating film 12, generation of wrinkles due to a circumferential length difference associated with curing is suppressed. In addition, the resin impregnated into the fiber sheet of the laminate S may be a thermoplastic resin, and in this case, the composite material F including the bent portion K is molded by heating the laminate S in a state where a tensile load in the circumferential direction is applied to the laminate S and then cooling the laminate S to cure the resin. Note that the heating furnace 27 may be an oven that does not perform pressurization or may be an autoclave that performs pressurization. That is, at the time of heating and curing the laminate S, the laminate S may be pressurized and heated, or the laminate S may be heated under atmospheric pressure. Then, in the molding method for the composite material F, the composite material F on which the bent portion K illustrated in FIG. 1 is molded is acquired by releasing the formed composite material F from the molding die 11 (step S7). After the execution of step S7, the molding method for the composite material F is terminated.

### [Second Embodiment]

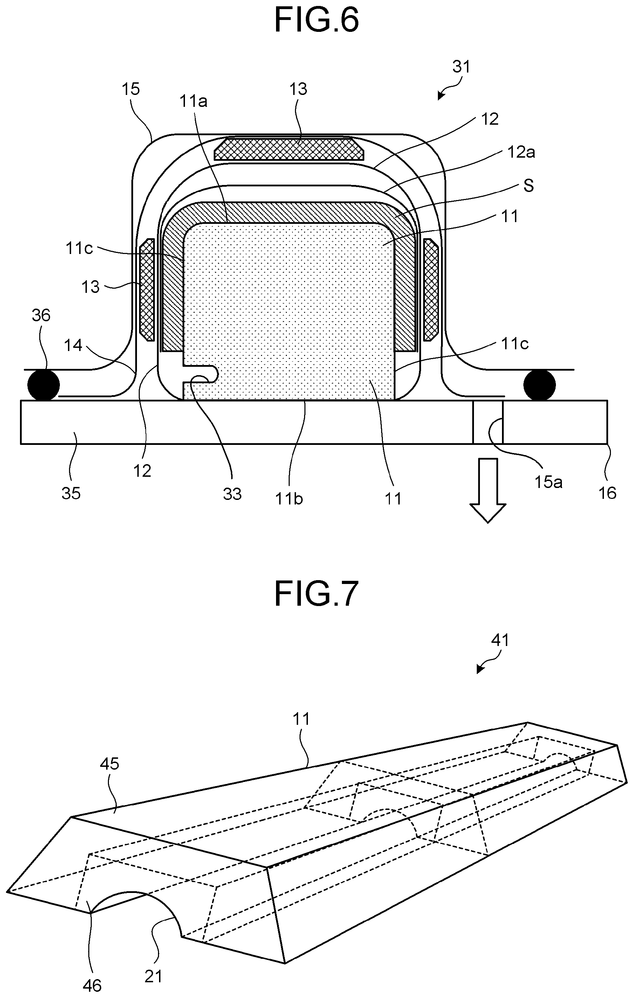

Next, a second embodiment will be described with reference to FIG. 6. Note that, in the second embodiment, in order to avoid redundant description, portions different from those of the first embodiment will be described, and portions having configurations similar to those of the first embodiment will be described with the same reference signs. FIG. 6 is a diagram schematically illustrating a molding apparatus according to the second embodiment.

A molding apparatus 31 of the second embodiment is different from the first embodiment in the position of a recess 33 formed in the molding die 11, and has an apparatus configuration in which the molding die 11 is arranged on a base plate 35. Similarly to the first embodiment, the molding apparatus 31 includes a molding die 11, a tension generating film 12, a pressure plate 13, a breather 14, a bag film 15, and a suction apparatus (not illustrated). In addition, the molding apparatus 31 further includes the base plate 35 on which the molding die 11 is disposed. Note that the tension generating film 12 and the pressure plate 13 are similar to those of the first embodiment, and thus description thereof is omitted.

In the molding die 11, the recess 33 formed in the molding die 11 is provided on the lower surface 11b side of the one side surface 11c. Note that, the recess 33 may be provided not only on the lower surface 11b side of the one side surface 11c but also on the lower surface 11b side of the other side surface 11c, and the two recesses 33 may be arranged to face each other. That is, the number of recesses 33 may be one or two, and is only required to be one or more.

With respect to such a molding die 11, the tension generating film 12 is wound in the circumferential direction of the molding die 11 similarly to the first embodiment as illustrated in FIG. 6. That is, the tension generating film 12 is disposed in the molding die 11 with a part thereof facing the recess 33.

The base plate 35 is a flat plate-shaped table, and is provided with a suction hole 15a connected to a suction apparatus. The breather 14 is disposed to cover the outside of the molding die 11, the tension generating film 12, and the pressure plate 13 installed on the base plate 35, and its peripheral edge is disposed on the base plate 35 and is disposed to face the suction hole 15a. The bag film 15 is disposed to cover the outside of the molding die 11, the tension generating film 12, the pressure plate 13, and the breather 14 installed on the base plate 35, and is fixed on the base plate 35 via a sealing material 36. Therefore, the bag film 15 and the base plate 35 are hermetically sealed.

In such a molding method for the composite material F using the molding die 11, the tension generating film 12 and the pressure plate 13 are disposed on the laminate S disposed in the molding die 11 and installed on the base plate 35. Thereafter, in the molding method for the composite material F, the breather 14 and the bag film 15 are covered with respect to the laminate S including the molding die 11 installed on the base plate 35, and the internal atmosphere between the bag film 15 and the base plate 35 is sucked. Then, a part of the tension generating film 12 is drawn into the recess 33 of the molding die 11, so that a tensile load in the circumferential direction is applied to the laminate S. As a result, a tensile load is applied to the laminate S, so that generation of wrinkles around the bent portion K is suppressed.

### [Third Embodiment]

Next, a third embodiment will be described with reference to FIG. 7. Note that, also in the third embodiment, in order to avoid redundant description, portions different from those of the first and second embodiments will be described, and portions having configurations similar to those of the first and second embodiments will be described with the same reference signs. FIG. 7 is a diagram schematically illustrating a molding die of a molding apparatus according to the third embodiment.

A molding die 11 of a molding apparatus 41 of the third embodiment includes a molding die main body 45 and an attachment portion 46 attached to and detached from the molding die main body 45. On the lower surface 11b of the molding die main body 45, a fitting groove to be fitted for mounting the attachment portion 46 is formed. The recess 21 is formed in the attachment portion 46. The recess 21 is formed, for example, over the longitudinal direction of the molding die 11, and the attachment portion 46 is detachably provided in the fitting groove formed in the lower surface 11b of the molding die main body 45, and is provided along the recess 21 over the longitudinal direction. A plurality of the attachment portions 46 may be prepared according to the shape of the recess 21. For example, it is possible to aim at molding in which the attachment portions 46 having different shapes of the recesses 21 are sequentially replaced when the molding conditions are changed to be more appropriate in accordance with the conditions of the laminate S.

The shape of the cross section of the recess 21 orthogonal to the longitudinal direction may be changed according to the shape of the composite material F to be molded. For example, in a case where the composite material F is a beam member whose size in the cross section decreases from one side to the other side in the longitudinal direction, the recess 21 may change so that the cross-sectional shape in the cross section decreases from one side to the other side in the longitudinal direction. In the third embodiment, the shape of the recess 21 may be changed by replacing the attachment portion 46 with respect to the molding die main body 45. Note that, in the third embodiment, the attachment portion 46 and the fitting groove are provided on the lower surface 11b of the molding die main body 45, but may be provided on the side surface 11c instead of the lower surface 11b.

As described above, the composite material molding method and the molding apparatus 1 according to the first to third embodiments are understood as follows, for example.

A composite material molding method according to a first aspect is a composite material F molding method for molding a composite material F by shaping and curing a laminate S in which a plurality of fiber sheets is laminated using a molding die 11, in which the composite material F includes a bent portion K having a bent shape, and the molding die 11 includes a molding surface for molding the composite material F and a recess 21 formed in a portion other than the molding surface, the composite material molding method including: a step S2 of disposing the laminate S on the molding surface of the molding die 11; a step S3 of covering the laminate S with a tension generating member (tension generating film 12) that generates tension in the laminate S at a time of shaping, and disposing a part of the tension generating member to face the recess 21; a step S4 of covering the laminate S covered with the tension generating member with a covering member (bag film 15) to hermetically seal between the covering member and the molding die 11; a step S5 of sucking atmosphere between the covering member and the molding die 11 and drawing in a part of the tension generating member into the recess 21 to shape the laminate S; and a step S6 of curing the laminate S after shaping to mold the composite material F.

According to this configuration, by drawing in a part of the tension generating member into the recess 21, the laminate S can be shaped in a state where a tensile load is applied to the laminate S. Therefore, the occurrence of molding defects due to the shaping of the laminate S can be suppressed. On the other hand, in the conventional molding method in which the entire molding die is covered only with a bag film, the pressing force due to the internal and external pressure difference applied in the molding process acts in the normal direction of the molding surface, and the excessive fibers caused by the change in the circumferential length difference cannot be eliminated. In the configuration of the present disclosure, a tensile load is applied to the laminate S in the shaping process or the molding process by drawing in a part of the tension generating member, and the occurrence of molding defects can be suppressed.

As a second aspect, in the composite material F molding method according to the first aspect, the covering member is a bag film that accommodates the laminate S together with the molding die 11.

According to this configuration, since the laminate S can be accommodated in the bag film 15 together with the molding die 11 to shape the laminate S, the apparatus configuration of the molding apparatus 1 can be made compact.

As a third aspect, in the composite material F molding method according to any one of the first and second aspects, the molding die 11 is long in the longitudinal direction, and in the step S3 of covering the laminate with the tension generating member, the tension generating member is wound around the molding die 11 in a circumferential direction with the longitudinal direction as an axial direction of a central axis to cover the laminate S with the tension generating member.

According to this configuration, the tension generating member can be easily disposed following the molding surface of the molding die 11 only by winding in the circumferential direction of the molding die 11.

As a fourth aspect, in the composite material F molding method according to the third aspect, in the step S3 of covering the laminate with the tension generating member, both end portions in a circumferential direction of the tension generating member wound around the molding die 11 in the circumferential direction are overlapped.

According to this configuration, the laminate S can be easily covered only by winding the tension generating member in the circumferential direction of the molding die 11.

As a fifth aspect, in the composite material F molding method according to the third aspect, in the step S3 of covering the laminate with the tension generating member, both end portions in a circumferential direction of the tension generating member wound around the molding die 11 in the circumferential direction are butted and joined.

According to this configuration, since the reaction force can be applied to the both end portions of the tension generating member by butting and joining the both end portions of the tension generating member, the tensile load can be suitably applied to the laminate S even in a case where a part of the tension generating member is drawn into the recess 21.

As a sixth aspect, in the composite material F molding method according to any one of the first to fifth aspects, in the step S4 of hermetically sealing between the covering member and the molding die 11, a pressing member (pressure plate 13) for pressing the laminate S to follow the molding die 11 is disposed on the laminate S.

According to this configuration, when a tensile load is applied to the laminate S, the laminate S tends to be circular by the principle of minimum free energy (principle of minimum potential energy). At this time, by pressing the laminate S toward the molding die 11 by the pressing member, the pressing member suppresses the laminate S from becoming circular due to the rigidity in the pressing direction, and the laminate S can be molded into a shape following the molding die 11. Note that the end portion of the pressing member is desirably subjected to chamfering because the ground contact pressure to the laminate S locally increases and the footprint is transferred to the laminate S. However, chamfering may not be performed.

A molding apparatus according to a seventh aspect is a molding apparatus 1 for molding a composite material by shaping and curing a laminate S in which a plurality of fiber sheets are laminated, in which the composite material F includes a bent portion K having a bent shape, the molding apparatus including: a molding die 11 having a molding surface for molding the composite material F and a recess 21 for drawing in a part of a tension generating member that generates tension in the laminate S at a time of shaping; the tension generating member (tension generating film 12) that covers the laminate S; a covering member (bag film 15) that covers the laminate S covered with the tension generating member; and a suction apparatus 16 that sucks atmosphere between the covering member and the molding die 11 in a state where the covering member and the molding die 11 are hermetically sealed.

According to this configuration, by drawing in a part of the tension generating member into the recess 21, the laminate S can be shaped in a state where a tensile load is applied to the laminate S. Therefore, the occurrence of molding defects due to the shaping of the laminate S can be suppressed.

As an eighth aspect, in the molding apparatus according to the seventh aspect, the composite material F is a beam member that is long in a longitudinal direction and is molded in an orthogonal plane orthogonal to the longitudinal direction, a cross-sectional shape in the orthogonal plane changes from one side to the other side in the longitudinal direction, and a cross-sectional shape of the recess in the orthogonal plane changes from the one side to the other side in the longitudinal direction.

According to this configuration, the magnitude of the tensile load can be appropriately changed by changing the cross-sectional shape of the recess 21 according to the change in the cross-sectional shape in the orthogonal plane (cross section) of the composite material F.

As a ninth aspect, in the molding apparatus according to the seventh or eighth aspect, the molding die 11 includes a molding die main body 45, and an attachment portion 46 that is attached to and detached from the molding die main body 45 and in which the recess 21 is formed.

According to this configuration, the shape of the recess 21 can be easily changed by replacing the attachment portion 46 with the molding die main body 45.

### Reference Signs List

- 1: Molding apparatus
- 11: Molding die
- 12: Tension generating film (tension generating member)
- 12a: Release film
- 13: Pressure plate (pressing member)
- 14: Breather
- 15: Bag film (covering member)
- 16: Suction apparatus
- 21: Recess
- 31: Molding apparatus (second embodiment)
- 33: Recess
- 41: Molding apparatus (third embodiment)
- 45: Molding die main body
- 46: Attachment portion
- K: Bent portion
- F: Composite material
- S: Laminate

## Claims

1. A composite material molding method for molding a composite material by shaping, by using a molding die, a laminate in which a plurality of fiber sheets are laminated into a shape including a bent portion having a bent shape, and curing a resin impregnated into the fiber sheets, wherein
the composite material includes the bent portion having the bent shape,
the molding die has a molding surface for molding the composite material and a recess formed in a portion other than the molding surface, and
the composite material molding method comprises the steps of:
disposing the laminate on the molding surface of the molding die;
covering the laminate with a tension generating member that generates tension in the laminate at a time of shaping, and disposing a part of the tension generating member to face the recess;
covering the laminate covered with the tension generating member with a covering member to hermetically seal between the covering member and the molding die;
sucking atmosphere between the covering member and the molding die to draw in a part of the tension generating member into the recess to shape the laminate; and
curing the laminate after shaping to mold the composite material.

2. The composite material molding method according to claim 1, wherein the covering member is a bag film that accommodates the laminate together with the molding die.

3. The composite material molding method according to claim 1, wherein
the molding die is long in a longitudinal direction, and
the step of covering the laminate with the tension generating member includes winding the tension generating member around the molding die in a circumferential direction of the molding die with the longitudinal direction as an axial direction of a central axis to cover the laminate with the tension generating member.

4. The composite material molding method according to claim 3, wherein the step of covering the laminate with the tension generating member includes overlapping both end portions in a circumferential direction of the tension generating member wound around the molding die in the circumferential direction.

5. The composite material molding method according to claim 3, wherein the step of covering the laminate with the tension generating member includes butting and joining both end portions in a circumferential direction of the tension generating member wound around the molding die in the circumferential direction.

6. The composite material molding method according to claim 1, wherein the step of hermetically sealing between the covering member and the molding die includes disposing on the laminate a pressing member for pressing the laminate to follow the molding die.

7. A molding apparatus for molding a composite material by shaping a laminate in which a plurality of fiber sheets are laminated into a shape including a bent portion having a bent shape and curing a resin impregnated into the fiber sheets, the composite material including the bent portion having the bent shape, the molding apparatus comprising:
a molding die including a molding surface partially including a bent molding surface for molding the composite material into a bent shape, and a recess for drawing in a part of a tension generating member that generates tension in the laminate at a time of shaping;
the tension generating member that covers the laminate;
a covering member that covers the laminate covered with the tension generating member; and
a suction apparatus that sucks atmosphere between the covering member and the molding die in a state where the covering member and the molding die are hermetically sealed.

8. The molding apparatus according to claim 7, wherein
the composite material is a beam member that is long in a longitudinal direction and is molded in an orthogonal plane orthogonal to the longitudinal direction, and a cross-sectional shape in the orthogonal plane changes from one side to the other side in the longitudinal direction, and
a cross-sectional shape of the recess in the orthogonal plane changes from the one side to the other side in the longitudinal direction.

9. The molding apparatus according to claim 7, wherein the molding die includes a molding die main body and an attachment portion that is attached to and detached from the molding die main body and in which the recess is formed.
